# EUROPEAN PATENT SPECIFICATION

(11) **EP 4 435 755 B1**
(45) Date of publication and mention of the grant of the patent: **01.10.2025**
(21) Application number: 24156171.1
(22) Date of filing: 06.02.2024
(51) Int. Cl.: G08G 5/00, G06Q 50/40, G06Q 10/04

(54) **AIRCRAFT FLEET ASSIGNMENT WITH SLOT CONSTRAINTS**
FLUGZEUGFLOTTENZUWEISUNG MIT SCHLITZBESCHRÄNKUNGEN
ATTRIBUTION DE FLOTTE D'AÉRONEFS À CONTRAINTES DE CRÉNEAU

(30) Priority: 20.03.2023 US 202318186873
(43) Date of publication of application: 25.09.2024
(73) Proprietor: The Boeing Company, Arlington, VA 22202 (US)
(72) Inventor: GRÖNKVIST, Åke Mattias, Arlington, 22202 (US); FREDLUND, Carl Johan Willard Kellerth, Arlington, 22202 (US); KJERRSTRÖM, Jens Ivan Arne, Arlington, 22202 (US); LARSSON, Lars Tomas, Arlington, 22202 (US); LUONG, Chi Thong, Arlington, 22202 (US); WESTERLUND, Karl Erik Andreas, Arlington, 22202 (US)
(74) Representative: Bryn-Jacobsen, Caelia

(56) References cited:
- US-A1- 2015 221 225
- US-A1- 2016 371 988
- US-A1- 2020 357 293
- US-A1- 2021 035 028

## Description

### BACKGROUND INFORMATION

### 1. Field:

The present disclosure relates generally to computer system and in particular, to a method, apparatus, system, and computer program product for managing fleet assignment of slots at airports.

### 2. Background:

A slot is an authorization to take off or land at a particular airport on a particular day at a specified time. A slot can be a landing slot, a takeoff slot, or a turn-slot combining a landing slot and a takeoff slot. Slots are allocated twice a year following a series of events, where the slot conference that allows airlines and coordinators to meet and work to obtain slots for use in flight schedules, is the most important.

When an airline receives the initial slots for the coming season, a schedule for that season has already been established. Further, tickets are out for sale for the season. The assigned slots may not align with the schedule that has been established. The airline may change the schedule to match the flights with the slots. Additionally, the airline can request to change slots. An airline can work with a slot coordinator to move slots at an airport. A slot coordinator can be in charge of slots for a single airport or a region. Currently, revising schedules to align the flights and slots can be a time-consuming process.

Therefore, it would be desirable to have a method and apparatus that take into account at least some of the issues discussed above, as well as other possible issues. For example, it would be desirable to have a method and apparatus that overcome a problem with aligning flights in schedules with assigned slots and negotiating slight changes.

US2016/371988A1 in an abstract states that "An approach for identifying slot exchanges for flights among a schedule of an aircraft operator includes acquiring existing slot assignments and flight schedules for flights operated by any airline that participate in a slot exchange program for a particular controlled airspace. Cost values are assigned to slots of the aircraft operator based on various criteria, such as any difference between flight times of particular flights and corresponding assigned slots. An optimization is performed to identify any alternate authority issued slots that, if assigned to flights of the aircraft operator, result in reduced cost values. Slot exchange requests are issued for the alternate authority issued slots in a manner that facilitates acceptance of the request without user intervention, by either the send or receiving airline. Flight schedules and assigned slots may be represented on a common display."

US2020/357293A1 in an abstract states that "Embodiments of the present disclosure relate to a method and apparatus for outputting information. The method may include: acquiring flight information, airport gate information, taxiway information and a taxiing path; constructing an integer programming model according to the flight information, the airport gate information, the taxiway information and the taxiing path, the integer programming model including a target, a decision variable and a constraint; optimizing the integer programming model according to the constraint; and solving the optimized integer programming model to obtain a corresponding relationship table of flights and airport gates, and outputting the corresponding relationship table."

US2015/221225A1 in an abstract states that "A method for managing aircraft ground operations includes receiving an initial gate assignment schedule, an initial operational task schedule, and a current flight schedule. The method also includes determining a first adjusted gate assignment schedule based at least in part on the initial gate assignment schedule and the current flight schedule to reduce costs associated with reassigning aircraft to alternative gates. In addition, the method includes determining a first adjusted operational task schedule based at least in part on the initial operational task schedule and the current flight schedule to reduce costs associated with reassigning ground crew members to alternative tasks. Furthermore, the method includes determining a second adjusted gate assignment schedule and a second adjusted operational task schedule based at least in part on the current flight schedule, the first adjusted gate assignment schedule, and the first adjusted operational task schedule."

### SUMMARY

Aspects of the present disclosure are set out in the independent claim(s). Other aspects and features of the present disclosure are set out in the claims and description below.

An example of the present disclosure provides a method for managing slots. The slots allocated to an airline are identified by computer system. A model that describes a relationship of flights in an input flight schedule and the slots that have been allocated subject to constraints is created by the computer system. An output flight schedule is created by the computer system using the model to obtain an extrema using a set of objectives. The flights are aligned to the slots in the output flight schedule.

In yet another example of the present disclosure, a flight scheduling system comprises a computer system and a schedule generator in the computer system. The schedule generator is configured to identify slots allocated to an airline. The scheduler is configured to create a model that describes a relationship between flights for an input flight schedule and the slots that have been allocated subject to constraints. The schedule generator is configured to generate an output flight schedule using the model to obtain an extrema using a set of objectives, wherein the flights are aligned to the slots in the output flight schedule.

In still another illustrative example of the present disclosure, a computer program product manages slots. The computer program product comprising a computer readable storage medium having program instructions embodied therewith, the program instructions executable by a computer system to cause the computer system to identify the slots allocated to an airline; create a model that describes a relationship between flights for an input flight schedule and the slots that have been allocated subject to constraints; and generate an output flight schedule using the model to obtain an extrema using a set of objectives, wherein the flights are aligned to the slots in the output flight schedule.

The features and functions can be achieved independently in various examples of the present disclosure or may be combined in yet other examples in which further details can be seen with reference to the following description and drawings.

### BRIEF DESCRIPTION OF THE DRAWINGS

The novel features believed characteristic of the illustrative examples are set forth in the appended claims. The illustrative examples, however, as well as a preferred mode of use, further objectives and features thereof, will best be understood by reference to the following detailed description of an illustrative example of the present disclosure when read in conjunction with the accompanying drawings, wherein:
**Figure 1** is a pictorial representation of a network of data processing systems in which illustrative examples may be implemented;
**Figure 2** is a block diagram of a flight environment in accordance with an illustrative example;
**Figure 3** is an illustration of a data flow diagram for managing slots in a schedule in accordance with an illustrative example;
**Figure 4** is an illustration of potential flight allocation changes to slots in accordance with an illustrative example;
**Figure 5** is an illustration of a flowchart of a process for managing slots in accordance with an illustrative example;
**Figure 6** is an illustration of a flowchart of a process for iteratively generating and output schedule in accordance with an illustrative example;
**Figure 7** is an illustration of a flowchart of a process for iteratively generating and output schedule in accordance with an illustrative example;
**Figure 8** is an illustration of a flowchart of process for swapping slots in accordance with an illustrative example;
**Figure 9** is an illustration of a flowchart of a process for sending output schedules in accordance with an illustrative example; and
**Figure 10** is an illustration of a block diagram of a data processing system in accordance with an illustrative example.

### DETAILED DESCRIPTION

The illustrative examples recognize and take into account one or more different considerations. aligning schedules with slots and requesting slot movement or changes is a difficult process. A conflict is present in keeping the intent of the schedule against aligning the schedule with available slots. Further, requesting slot changes can be made but only to a certain extent. The ability to obtain slight changes may depend on other airlines wish to move slots for having available slots.

Thus, the illustrative examples provide a method, apparatus, system, for managing slots for an aircraft fleet. In one illustrative example, the scheduler can focus on the quality of the schedule while aligning the schedule to available slots. In the illustrative example, the schedule generator can enable identifying schedule changes and potential slot movement based on analyzing a schedule with allocated slots in a manner that increases the ability to at least one of reduce schedule changes or reduce slot changes.

Thus, illustrative examples provide a method, apparatus, system, and computer program product for managing slots. In these illustrative examples, the slots are slots allocated to an airline. A model that describes a relationship of flights in an input flight schedule and slots that have been allocated subject to constraints is created by the computer system. An output flight schedule is created by the computer system using the model to obtain an extrema using a set of objectives, wherein the flights are aligned to the slots in the output flight schedule.

As used herein, a "set of" when used with reference items means one or more items. For example, a set of objectives is one or more objectives.

In the illustrative example, the process aligning slots to schedules can be performed using objectives. These objectives can take the form of key performance indicators. These key performance indicators can include, for example, revenue, operating costs, and turn-time buffers.

The illustrative examples recognize and take into account one or more different considerations.

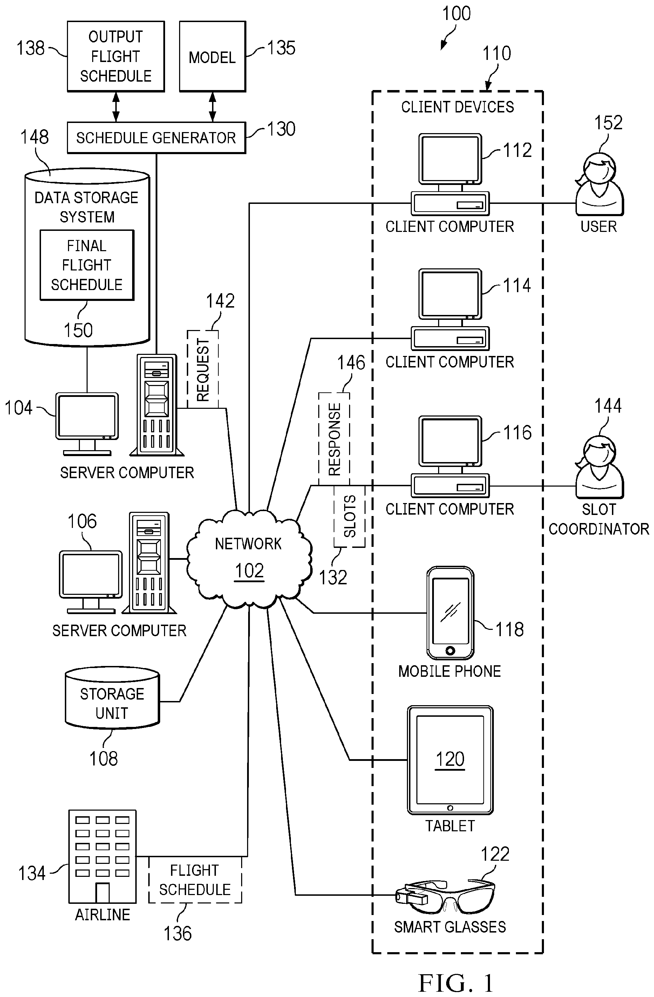

With reference now to the figures and, in particular, with reference to **Figure 1****,** a pictorial representation of a network of data processing systems is depicted in which illustrative examples may be implemented. Network data processing system **100** is a network of computers in which the illustrative examples may be implemented. Network data processing system **100** contains network **102,** which is the medium used to provide communications links between various devices and computers connected together within network data processing system **100.** Network **102** may include connections, such as wire, wireless communication links, or fiber optic cables.

In the depicted example, server computer **104** and server computer **106** connect to network **102** along with storage unit **108.** In addition, client devices **110** connect to network **102.** As depicted, client devices **110** include client computer **112,** client computer **114,** and client computer **116.** Client computers can be computers used by a schedule generator to manipulate the schedule, agents inside or outside the airline that access flight schedule information, and slot coordinator **144** (outside the airline) that receive slot requests and send back feedback.

In the depicted example, server computer **104** provides information, such as boot files, operating system images, and applications to client devices **110.** Further, client devices **110** can also include other types of client devices such as mobile phone **118,** tablet computer **120,** and smart glasses **122.** In this illustrative example, server computer **104,** server computer **106,** storage unit **108,** and client devices **110** are network devices that connect to network **102** in which network **102** is the communications media for these network devices. Some or all of client devices **110** may form an Internet of things (IoT) in which these physical devices can connect to network **102** and exchange information with each other over network **102.**

Client devices **110** are clients to server computer **104** in this example. Network data processing system **100** may include additional server computers, client computers, and other devices not shown. Client devices **110** connect to network **102** utilizing at least one of wired, optical fiber, or wireless connections.

Program instructions located in network data processing system **100** can be stored on a computer-recordable storage medium and downloaded to a data processing system or other device for use. For example, program instructions can be stored on a computer-recordable storage medium on server computer **104** and downloaded to client devices **110** over network **102** for use on client devices **110.**

In the depicted example, network data processing system **100** is the Internet with network **102** representing a worldwide collection of networks and gateways that use the Transmission Control Protocol/Internet Protocol (TCP/IP) suite of protocols or standard web services protocols to communicate with one another. At the heart of the Internet is a backbone of high-speed data communication lines between major nodes or host computers consisting of thousands of commercial, governmental, educational, and other computer systems that route data and messages. Of course, network data processing system **100** also may be implemented using a number of different types of networks. For example, network **102** can be comprised of at least one of the Internet, an intranet, a local area network (LAN), a metropolitan area network (MAN), or a wide area network (WAN). **Figure 1** is intended as an example, and not as an architectural limitation for the different illustrative examples.

As used herein, "a number of" when used with reference to items, means one or more items. For example, "a number of different types of networks" is one or more different types of networks.

Further, the phrase "at least one of," when used with a list of items, means different combinations of one or more of the listed items can be used, and only one of each item in the list may be needed. In other words, "at least one of" means any combination of items and number of items can be used from the list, but not all of the items in the list are required. The item can be a particular object, thing, or a category.

For example, without limitation, "at least one of item A, item B, or item C" may include item A, item A and item B, or item B. This example also may include item A, item B, and item C or item B and item C. Of course, any combination of these items can be present. In some illustrative examples, "at least one of" can be, for example, without limitation, two of item A; one of item B and ten of item C; four of item B and seven of item C; or other suitable combinations. The item can be a particular object, a thing, or a category.

In this illustrative example, schedule generator **130** can manage slots **132** allocated to airline **134.** In this example, slots **132** are slots for an aircraft fleet operated by airline **134.** In this example, airline **134** can send slots **132** and flight schedule **136** to schedule generator **130** over network **102.**

Schedule generator **130** can create model **135** that describes the relationship of flights in the flight schedule **136** and slots **132** to airline **134.** Model **135** can also include constraints. These constraints can be, for example, available aircraft in the fleet, buffer time between flights, the size of aircraft, or other constraints.

In this illustrative example, schedule generator **130** can generate output flight schedule **138** using model **135** to obtain a maximization or a minimization of a set of objectives. In this example, flights in output flight schedule **138** can be aligned with slots **132** in this flight schedule.

Depending on the acceptability of output flight schedule **138,** changes to at least one of the schedule or constraints such as schedule requirements can be made. These changes can be used to regenerate output flight schedule **138** using model **135.**

Further, depending on the acceptability of output flight schedule **138,** schedule generator **130** can send request **142** to slot coordinator **144** at client computer **116** to change one or more of the slots **132** flight in output flight schedule **138.** Slot coordinator **144** can return response **146** indicating whether if any or all of flight changes in request **142** have been accepted. In response to changes being made to slots **132,** output flight schedule **138** can be regenerated using slots **132** with the changes and flight schedule **136.**

When output flight schedule **138** is considered usable, output flight schedule **138** can be stored in data storage system **148** as final flight schedule **150.** Final flight schedule **150** can be retrieved and sent over network **102** in response to different events. For example, user **152** can request information about flights in final flight schedule **150** in one illustrative example. This request is an example of an event relating to that information regarding flights in final flight schedule **150** is transferred to client computer **112** over network **102.**

In this example, user **152** can be, for example, a crew scheduler that creates flight crew rosters. These rosters can be planned based on information about flights in final flight schedule **150.**

In another illustrative example, user **152** can be a passenger reservation system receiving information about updated flights I the flight schedule. In yet another illustrative example, user **152** can be a maintenance planner obtaining information about flights.

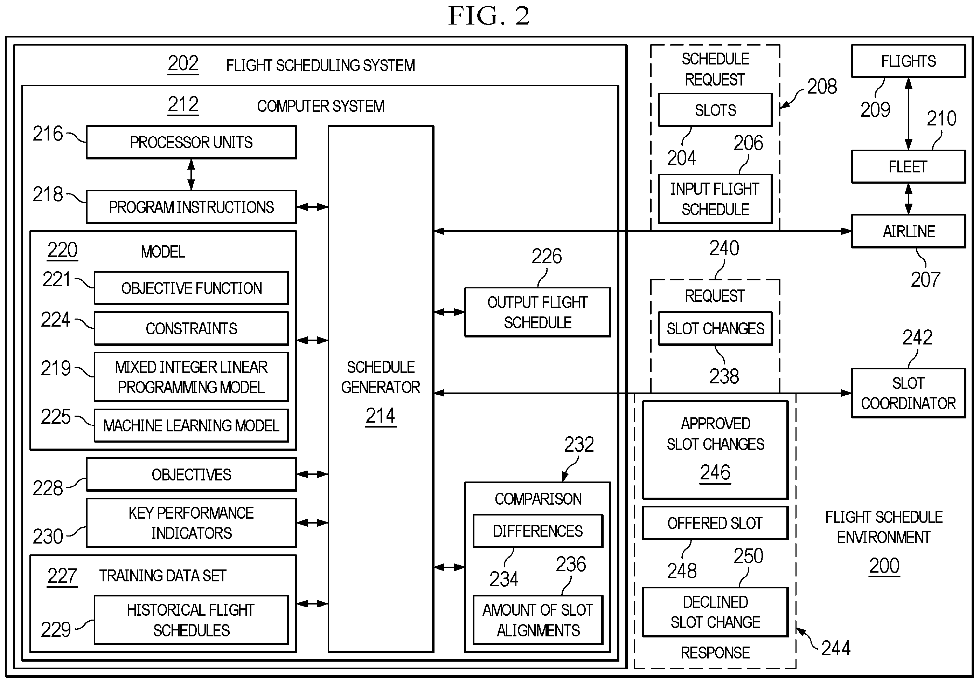

With reference now to **Figure 2****,** a block diagram of a flight environment is depicted in accordance with an illustrative example. In this illustrative example, flight schedule environment **200** includes components that can be implemented in hardware such as the hardware shown in network data processing system **100** in **Figure 1****.**

In this illustrative example, flight scheduling system **202** in flight schedule environment **200** can operate to manage slots **204** with respect to input flight schedule **206** for airline **207.** As depicted, flight scheduling system **202** comprises computer system **212** and schedule generator **214.** Schedule generator **214** is located in computer system **212.**

Schedule generator **214** can be implemented in software, hardware, firmware or a combination thereof. When software is used, the operations performed by schedule generator **214** can be implemented in program instructions configured to run on hardware, such as a processor unit. When firmware is used, the operations performed by schedule generator **214** can be implemented in program instructions and data and stored in persistent memory to run on a processor unit. When hardware is employed, the hardware may include circuits that operate to perform the operations in schedule generator **214.**

In the illustrative examples, the hardware may take a form selected from at least one of a circuit system, an integrated circuit, an application specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field programmable logic array, a field programmable gate array, and other suitable hardware devices. Additionally, the processes can be implemented in organic components integrated with inorganic components and can be comprised entirely of organic components excluding a human being. For example, the processes can be implemented as circuits in organic semiconductors.

Computer system **212** is a physical hardware system and includes one or more data processing systems. When more than one data processing system is present in computer system **212,** those data processing systems are in communication with each other using a communications medium. The communications medium may be a network. The data processing systems may be selected from at least one of a computer, a server computer, a tablet, or some other suitable data processing system.

As depicted, computer system **212** includes a number of processor units **216** that are capable of executing program instructions **218** implementing processes in the illustrative examples. In other words, program instructions **218** are computer readable program instructions.

As used herein, a processor unit in the number of processor units **216** is a hardware device and is comprised of hardware circuits such as those on an integrated circuit that respond to and process instructions and program code that operate a computer. When the number of processor units **216** executes program instructions **218** for a process, the number of processor units **216** can be one or more processor units that are on the same computer or on different computers. In other words, the process can be distributed between processor units **216** on the same or different computers in computer system **212.**

Further, the number of processor units **216** can be of the same type or different type of processor units. For example, a number of processor units **216** can be selected from at least one of a single core processor, a dual-core processor, a multi-processor core, a general-purpose central processing unit (CPU), a graphics processing unit (GPU), a digital signal processor (DSP), or some other type of processor unit.

In this example, airline **207** can send an identification of slots **204** and can send input flight schedule **206** in schedule request **208** to schedule generator **214.** In this example, input flight schedule **206** is a flight schedule for fleet **210** operated by airline **207.**

As depicted, schedule generator **214** can identify slots **204** allocated to airline **207.** In this example, slots **204** can be identified from schedule request **208.** Schedule generator **214** creates model **220** that describes a relationship between flights **209** in input flight schedule **206** and slots **204** that have been allocated subject to constraints **224.** In one illustrative example, model **220** can comprise objective function **221** and constraints **224** and can be mixed integer linear programming model **219.** In this example, schedule generator **214** can include optimization process that uses model **220** to obtain output flight schedule **226.**

Schedule generator **214** can generate output flight schedule **226** using model **220** to obtain an extrema using a set of objectives **228.** The extrema can be a minimization or maximization using the set of objectives **228.**

For example, schedule generator **214** can maximize a parameter such as the number of flights **209** that match slots **204.** In other words, increasing the matching of flights **209** to slots **204,** increase alignment between flights **209** and slots **204** can occur. To increase the matching, flight times can be adjusted by schedule generator **214** subject to constraints **224.** Adjusting the flight times to increase matches between flights **209** and slots **204** can be performed by schedule generator **214.**

In this example, flights **209** are aligned to slots **204** in output flight schedule **226.** In this example, the output can be generated by schedule generator **214** using an optimization process such as a generated using a branch and bound optimization process.

In generating output flight schedule **226,** schedule generator **214** can swap slots **204** between flights **209** such that increased alignment of slots **204** with flights **209** occurs. The increased alignment can mean that slots swapped between two flights result in both flights being aligned with the slots. In other words, both the departure time for both flights can have the same time as slots. In this example, swapping of slots is based on an airport. In other words, slots **204** can be swapped between flights **209** taking off or landing at the same airport.

In this illustrative example, key performance indicators **230** are used to create objectives **228.** In this illustrative example, key performance indicator is a metric of a specific objective. For example, key performance indicator can be weighted slot deviation. The objective of this key performance indicator can be to minimize the deviation in time between flights and their slots using different weights to model the expected difficulty in modifying slots at different airports at different times. Another key performance indicator can be utilization by fleet **210.** Another key performance indicator can be to create sufficient room for maintenance. The objective for this key performance indicator can be to reduce maintenance cost.

Further, in one illustrative example, schedule generator **214** can adjust a number of flights **209** in output flight schedule **226.** Output flight schedule **226** with adjustments to the number of flights **209** becomes the input flight schedule **206** to perform another iteration in response to output flight schedule **226** being unacceptable for use. The determination of whether output flight schedule **226** can be performed by determining how closely output flight schedule **226** is to input flight schedule **206.** This example, the determination can be made by comparing the scheduling of flights **209** in output flight schedule **226** to the scheduling of flights **209** input flight schedule **206.**

Further, the determination of whether output flight schedule **226** is acceptable for use can also be made by determining on the number of slots **204** aligned with flights **209,** the amount of slot misalignment, the amount flight changes between output flight schedule **226** and input flight schedule **206,** and other factors that can be used to measure the acceptability of input flight schedule **206** for use in operating fleet **210** to provide service.

These determinations form comparison **232.** Comparison **232** identifies differences **234** between output flight schedule **226** and input flight schedule **206.** This comparison can also include number of alignments **236** between slots **204** and flights **209** in output flight schedule **226.** These and other measurements, such as expected revenue, can be used to determine whether output flight schedule **226** is acceptable for use. In one illustrative example, comparison **232** can be compared to a threshold for differences **234** and number of alignments **236** between slots **204** and flights **209** in determining whether output flight schedule **226** is acceptable. The threshold can indicate the maximum number of differences **234** between flights **209** in output flight schedule **226** and input flight schedule **206.** The threshold can also define a minimum number of alignments **236** between slots **204** and flights **209** that are required.

In this illustrative example, an alignment is present between a slot and a flight when the slot in the flight had the same time.

In this illustrative example, schedule generator **214** can repeat creating model **220,** generating output flight schedule **226,** adjusting output flight schedule **226** until the output flight schedule **226** is acceptable for use.

Additionally, schedule generator **214** can adjust the set of objectives **228** in response to output flight schedule **226** being unacceptable for use. Schedule generator **214** can then repeat creating model **220,** generating output flight schedule **226,** adjusting output flight schedule **226** until the output flight schedule **226** is acceptable for use. For example, an objective to reduce operating costs to a selected level can be changed to a different level depending on how close output flight schedule **226** is to input flight schedule **206.**

In this illustrative example, output flight schedule **226** can be considered acceptable for use even when some of slots **204** may not be aligned as desired with flights **209.** For example, a slot may be for a departure at time t1 while the flight is scheduled for time t1 plus 10 minutes.

In one illustrative example, schedule generator **214** can identify a set of slot changes **238** in response to output flight schedule **226** being acceptable for use. These slot changes can be identified based on which slots are not aligned with flights **209** with output flight schedule **226.** Slots can be selected based on the amount of misalignment of a flight with a slot. For example, a threshold of 10 minutes may be selected for selecting slots **204.** For example, if the difference between the flight and the slot is 5 minutes, that flight can be selected for inclusion in slot changes **238.** The requests can be to obtain a slot that aligns with the flight. For example, the request can be made to exchange the slot at time t for a slot at time t plus 5 minutes. In this example, selecting slots with lower differences with the flights assigned to those slots can increase the likelihood an approval of a slot change will occur.

Schedule generator **214** sends request **240** to change the set of slots **204** to slot coordinator **242.** Slot coordinator **242** is an authority that can authorize changes for slots **204.** Slot coordinator **242** can be different for different airports, regions, or countries.

Slot coordinator **242** returns response **244.** Response **244** can include approved slot changes **246.** In this example, approved slot change **246** identifies slots moved in time, swapped slots, or change of aircraft type. In this example, offered slot **248** identifies an offer from the slot coordinator **242** of a change to an existing slot or a new slot. Declined slot change **250** identifies a response from the slot coordinator **242** where the requested slot change has been declined. Schedule generator **214** can repeat creating model **220** generating output flight schedule **226** using response **244** as a result of a change to slots **204** made in response to request **240** to change the set of slots **204** sent to slot coordinator **242.**

In one illustrative example, one or more technical solutions are present that overcome a technical problem for the airline **207** how best make use of available slots. As a result, one or more technical solutions may provide a technical effect generating improved flight schedules based on matching flights to slots. In the illustrative examples, slots are not tightly linked to flights. As a result, the flights can be interchanged or swapped as needed between different slots to obtain matches between flights and slots and to reduce the amount of mismatch between flights and slots when exact matches are not possible. The matching of slots is subject to constraints such as using slots for flights in the same airport. Further, constraints in swapping slots can also be based on slots being swapped for same type of aircraft or aircraft of a similar weight and performance.

Computer system **212** can be configured to perform at least one of the steps, operations, or actions described in the different illustrative examples using software, hardware, firmware or a combination thereof. As a result, computer system **212** operates as a special purpose computer system in which schedule generator **214** in computer system **212** enables matching slots with flight and changing flights to provide matches between flights and slots subject to constraints. In particular, schedule generator **214** transforms computer system **212** into a special purpose computer system as compared to currently available general computer systems that do not have schedule generator **214.**

The illustration of flight schedule environment **200** in **Figure 2** is not meant to imply physical or architectural limitations to the manner in which an illustrative example may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative example.

For example, model **220** can be implemented using machine learning model **225** instead of mixed integer linear programming model **219.** A machine learning model is a type of artificial intelligence model that can learn without being explicitly programmed. A machine learning model can learn based on training data input into the machine learning model.

The machine learning model can learn using various types of machine learning algorithms. The machine learning algorithms include at least one of a supervised learning, and unsupervised learning, a feature learning, a sparse dictionary learning, an anomaly detection, a reinforcement learning, a recommendation learning, or other types of learning algorithms.

Examples of machine learning models include an artificial neural network, a convolutional neural network, a decision tree, a support vector machine, a regression machine learning model, a classification machine learning model, a random forest learning model, a Bayesian network, a genetic algorithm, and other types of models. These machine learning models can be trained using data and process additional data to provide a desired output, such as output flight schedule **226.**

In this example, when model **220** is implemented using machine learning model **225,** machine learning model **225** can be trained using training data set **227.** Training data set **227** can comprise historical flight schedules **229** that identify flights and slots used by those flights. With machine learning model **225,** objective function **221** can be implemented in machine learning model **225** as a problem to be optimized. For example, a candidate solution, such as a flight schedule with slot alignments, can be input into machine learning model **225** and this solution can be evaluated against a portion of training data set **227.** The cost can be an error score or loss in machine learning model **225.**

In this example, when model **220** takes the form of machine learning model **225,** schedule generator **214** can use machine learning model **225** to maximize a parameter by treating output of machine learning model **225** as the objective function to be maximized. A similar process can be used to minimize a particular parameter.

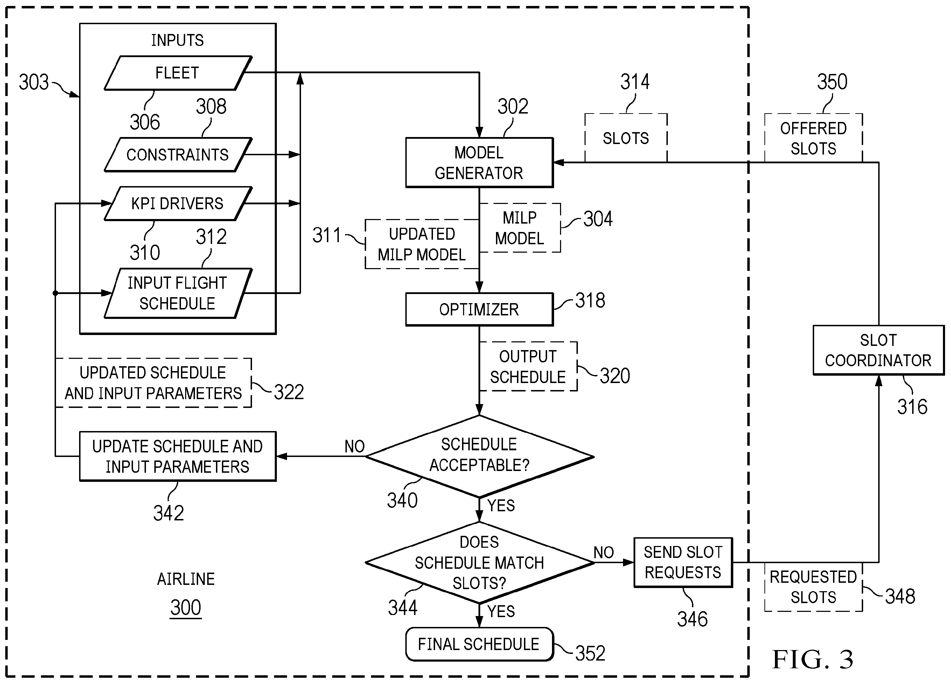

With reference next to **Figure 3****,** an illustration of a data flow diagram for managing slots in a schedule is depicted in accordance with an illustrative example. Data flow illustrated in this figure can be implemented using flight scheduling system **202** in **Figure 2****.** This dataflow can be implemented using schedule generator **214** and other components in flight scheduling system **202** in **Figure 2****.** As depicted, the data flow in this figure is for airline **300.** As depicted, the dataflow includes inputs to model generator **302** that model generator uses to create mixed integer linear programming model (MILP) model **304.**

In this illustrative example, inputs **303** comprise a number of different types of information. As depicted, inputs **303** comprise fleet **306,** constraints **308,** key performance indicator (KPI) drivers **310,** and input flight schedule **312.**

In this illustrative example, fleet **306** are the aircraft available to operate a flight schedule. Constraints **308** are limits to using fleet **306** in the flight schedule. These limits can be, for example, limits to routes and airports that fleet **306** can operate.

Key performance indicator drivers **310** describes measurements used to evaluate objectives. These measurements can include, for example, revenue, costs, asset usage, maintenance, fuel consumption, and other measurements that can be used to evaluate the quality of a flight schedule. Tuning of these drivers may be performed to obtain a desired flight schedule.

Input flight schedule **312** is the preferred flight schedule for airline **300.** Input flight schedule **312** can identify routes, airports, and dates for flights. In this example, input flight schedule **312** does not contain slots.

In this illustrative example, model generator **302** also receives slots **314** from slot coordinator **316.** Slots **314** are slots for different airports assigned to flights for fleet **306.** In this illustrative example, each slot prescribes a certain departure or arrival time as well as aircraft type for a flight to or from a particular airport. In this example, slots **314** are the initial set of slots that can be refined during an iterative process between slot coordinator **316** and airline **300** through this dataflow.

As depicted, model generator **302** receives inputs **303** and slots **314** to generate mixed integer linear programming model (MILP) model **304.** Optimizer **318** uses mixed integer linear programming model (MILP) model **304** to generate output schedule **320.** In generating output schedule **320,** mixed integer linear programming model (MILP) model **304** can perform different operations including assigning flights to slots, changing flight times, and other operations.

In this illustrative example, output schedule **320** comprises a timing of flights, assignment of aircraft type to flight, and an assignment of flights to slots. In this illustrative example, the revised schedule together with assignments of flights to slots are present in output schedule **320.**

With current techniques, a flight is coupled to a specific slot. In this example, optimizer **318** treats slots **314** as a portfolio of assets and allows flights to be scheduled to any nearby slot. With this type of optimization, a higher-quality schedule can be generated.

In this illustrative example, output schedule **320** can be analyzed to determine whether this output schedule is acceptable for use (block **340).** The analysis can include determining the amount of alignment between flights and slots **314.** Further, the analysis can also include determining whether flights have been changed in aligning flights with slots **314.**

If output schedule **320** is not acceptable, the process updates the schedule and input parameters (block **342).** In this illustrative example, the updated schedule becomes input flight schedule **312.** The updated input parameters become key performance indicator (KPI) drivers **310** in this example. The same slots are used in this example. The process then generates updated mixed integer linear programming model (MILP) model **311** with inputs **303.** This process can be performed iteratively until an acceptable output schedule is identified.

With reference again to block **340,** if output schedule **320** is determined to be acceptable, a determination is made as to whether the schedule matches the slots (block **344).** Output schedule **320** may be acceptable even if an alignment between all of the flights and slots are not present. In other words, a mismatch of some slots for flights may occur. If the schedule does not match the slots, the process can send slot requests (block **346).**

In this example, requested slots **348** are sent to slot coordinator **316.** Requested slots **348** can include a request to change at least one of a timing of slots or an assignment of aircraft types to slots. In response to receiving this response, slot coordinator **316** provides one or more of requested slots **348.** As depicted, slot coordinator **316** can return offered slots **350** to model generator **302.** Model generator uses offered slots **350** and inputs **303** to generate mixed integer linear programming model (MILP) model **304.** In this example, offered slots **350** can be slots offered based off of requested slots **348.** In this case, offered slots **350** can be used with slots **314** to generate model. In other cases, offered slots **350** can be all of the slots for airline **300.** In this case, offered slots **350** are used in place of slots **314** with inputs **303** to generate updated mixed integer linear programming model (MILP) model **311.**

This process can be performed iteratively until acceptable output schedule is obtained in which schedule matches slots. With reference again to block **344,** when the schedule matches the slots, final schedule **352** is generated for use by airline **300** to operate fleet **306.**

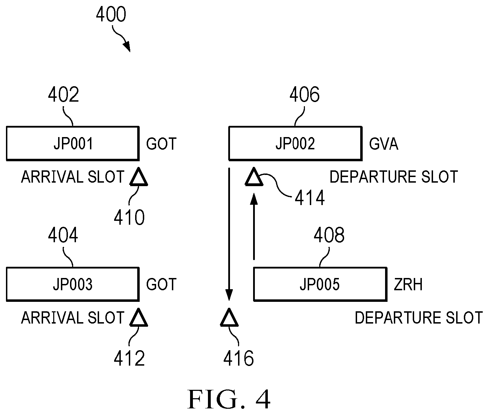

With reference next to **Figure 4****,** an illustration of potential flight allocations changes to slots is depicted in accordance with an illustrative example. In this illustrative example, slots **400** includes arrival slot JP001 402**,** arrival slot JP003 404**,** departure slot JP002 406**,** and departure slot JP005 408**.**

Slot is often strictly linked to a flight. However, in the illustrative example, slot coordinators often do not care if a flight departs from or arrives at a particular airport as long as the flight is operated with aircraft of a similar type of a similar size. This situation opens up an ability to treat slots at airport as a portfolio of assets that can be swapped within the airline.

In this example, arrival slot JP001 402 matches flight arrival time **410** of a flight to Göteborg Landvetter Airport (GOT), and arrival slot JP003 404 matches flight arrival time **412** of a flight to Göteborg Landvetter Airport (GOT). As depicted, a mismatch is present with the departure slots. Departure slot JP002 406 has a mismatch with departure time **414** for a flight to Geneva airport (GVA), and departure slot JP005 408 has a mismatch with departure time **416** for a flight to Zürich airport (ZRH).

In this example, departure slot JP002 406 and departure slot JP005 408 can be swapped with each other to match departure time **414** and departure time **416.** This swap of slots results in departure slot JP002 406 having departure time **416** for the flight to Zürich airport (ZRH), and departure slot JP005 408 having departure time **414** for the flight to Geneva airport (GVA).

As result, slot swapping provides new opportunities for aligning a flight schedule with available slots not used with current techniques. When available slots are insufficient to create a feasible schedule, a value is present for getting closer to an available slot. The value of slot alignment varies depending on airport. For example, a slot coordinator may be more likely to approve a slot change as the difference between the current slot in a desired slot becomes smaller.

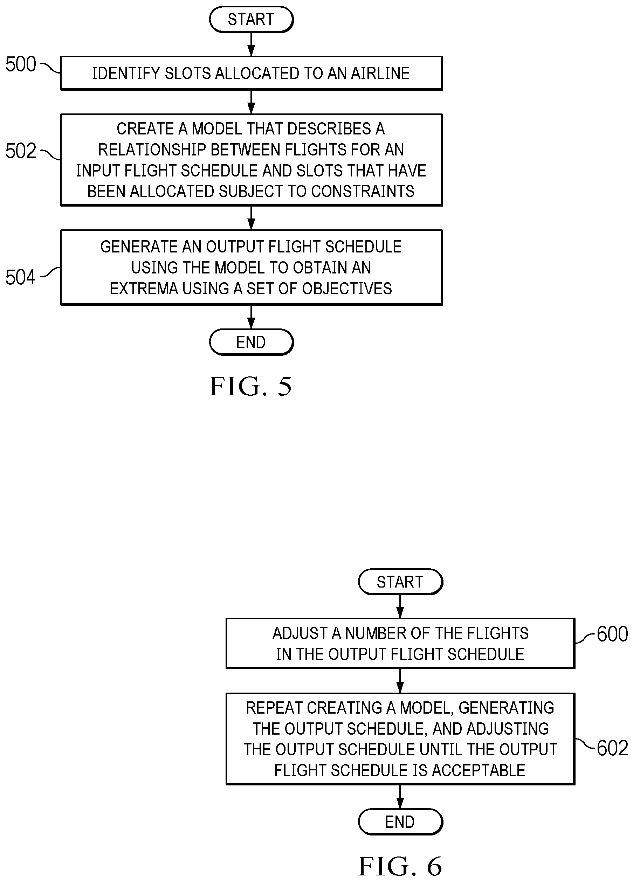

Turning next to **Figure 5****,** an illustration of a flowchart of a process for managing slots is depicted in accordance with an illustrative example. The process in **Figure 5** can be implemented in hardware, software, or both. When implemented in software, the process can take the form of program instructions that are run by one of more processor units located in one or more hardware devices in one or more computer systems. For example, the process can be implemented in schedule generator **214** in computer system **212** in **Figure 2****.**

The process begins by identifying slots allocated to an airline (operation **500).** The process creates a model that describes a relationship between flights for an input flight schedule and slots that have been allocated subject to constraints (operation **502).**

The process generates an output flight schedule using the model to obtain an extrema using a set of objectives (operation **504).** The process terminates thereafter. In operation **504,** the flights are aligned to the slots in the output flight schedule. The alignment may not be exact in which every slot matches every departure or arrival time.

Turning now to **Figure 6****,** an illustration of a flowchart of a process for iteratively generating and output schedule is depicted in accordance with an illustrative example. The process illustrated in this figure is an example of additional operations that can be performed with the operations in **Figure 5** to iteratively generate output schedules.

The process adjusts a number of the flights in the output flight schedule (operation **600).** In operation **600,** the output flight schedule with adjustments to the number of flights becomes the input flight schedule for to perform another iteration in response to the output flight schedule being unacceptable for use.

The process repeats creating a model, generating the output schedule, and adjusting the output schedule until the output flight schedule is acceptable (operation **602).** The process terminates thereafter in operation **602.** These steps correspond to operation **502,** operation **504,** and operation **600.**

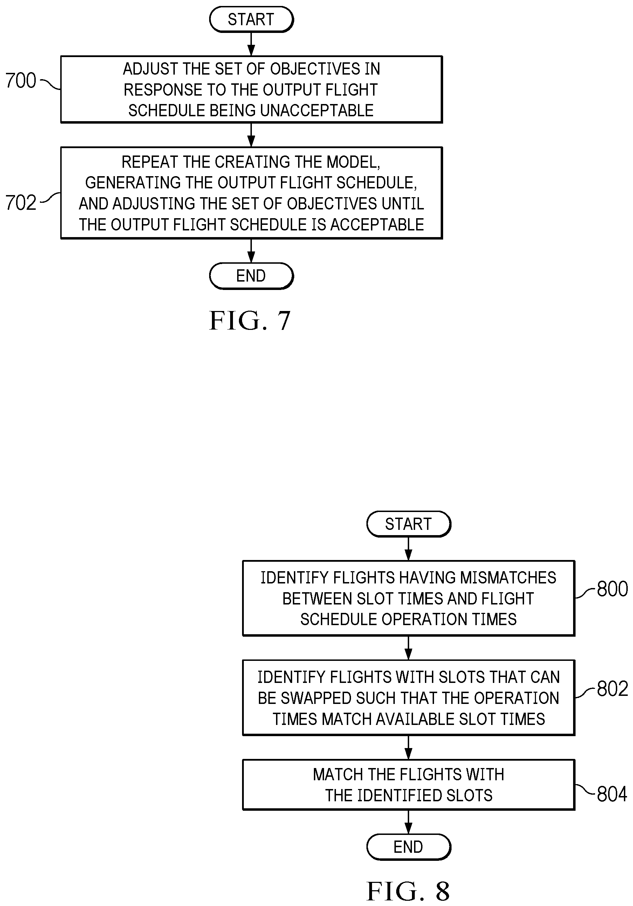

Turning next to **Figure 7****,** an illustration of a flowchart of a process for iteratively generating and output schedule is depicted in accordance with an illustrative example. The process illustrated in this figure is an example of additional operations that can be performed with the operations in **Figure 5** to iteratively generate output schedules.

The process adjusts the set of objectives in response to the output flight schedule being unacceptable for use (operation **700).** The process repeats creating the model, generating the output schedule, and adjusting the set of objectives until the output flight schedule is acceptable (operation **702).** The process terminates thereafter in operation **702.** These steps correspond to operation **502,** operation **504,** and operation **700.**

In **Figure 8****,** an illustration a flowchart of process for swapping slots is depicted in accordance with an illustrative example. The process illustrated in **Figure 8** can be implemented by model to swap slots as part of generating and output light schedule.

The process identifies flights having mismatches between slot times and flight schedule operation times (operation **800).** In this example, flight schedule operation times can be arrival times or departure times for flights. The process identifies flights with slots that can be swapped such that the operation times match available slot times (operation **802).** In operation **802,** a flight assigned to one slot can be re-allocated to another slot. For example, slots can be departure slots that are switched with other departure slots to obtain better alignment between flights and slots. The process matches the flights with the identified slots (operation **804).** The process terminates thereafter.

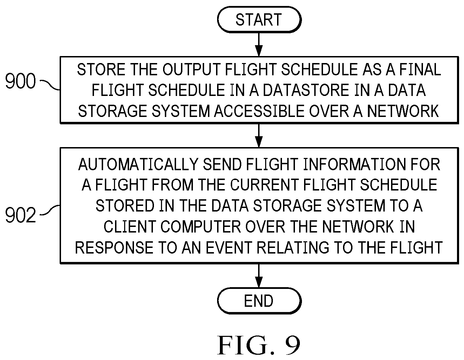

With reference next to **Figure 9****,** an illustration of a flowchart of a process for sending output schedules is depicted in accordance with an illustrative example. The process illustrated in **Figure 9** is an example of additional operations that can be performed with the operations in **Figure 6****.**

The process stores the output flight schedule as a final flight schedule in a datastore in a data storage system accessible over a network (operation **900).** The process automatically sends flight information for a flight from the final flight schedule stored in the data storage system to a client computer over the network in response to an event relating to the flight (operation **902).** The process terminates thereafter.

The flowcharts and block diagrams in the different depicted examples illustrate the architecture, functionality, and operation of some possible implementations of apparatuses and methods in an illustrative example. In this regard, each block in the flowcharts or block diagrams can represent at least one of a module, a segment, a function, or a portion of an operation or step. For example, one or more of the blocks can be implemented as program instructions, hardware, or a combination of the program instructions and hardware. When implemented in hardware, the hardware can, for example, take the form of integrated circuits that are manufactured or configured to perform one or more operations in the flowcharts or block diagrams. When implemented as a combination of program instructions and hardware, the implementation may take the form of firmware. Each block in the flowcharts or the block diagrams can be implemented using special purpose hardware systems that perform the different operations or combinations of special purpose hardware and program instructions run by the special purpose hardware.

In some alternative implementations of an illustrative example, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

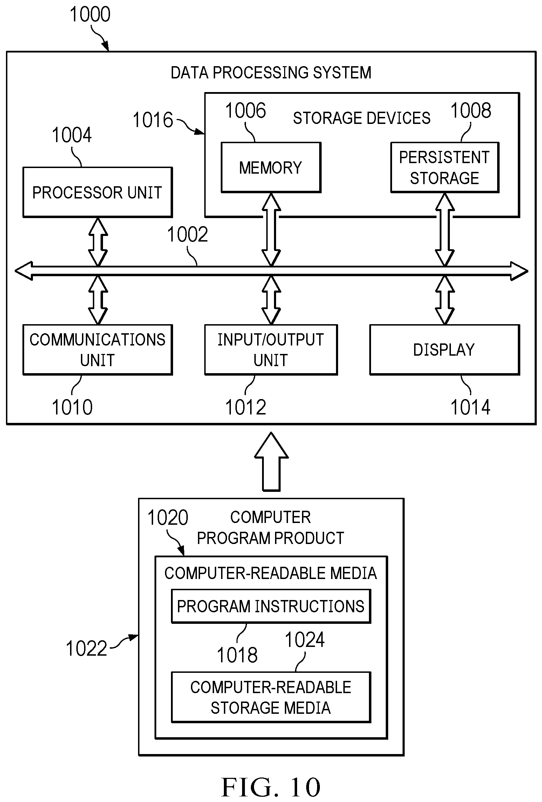

Turning now to **Figure 10****,** a block diagram of a data processing system is depicted in accordance with an illustrative example. Data processing system **1000** can be used to implement server computer **104,** server computer **106,** client devices **110,** in **Figure 1****.** Data processing system **1000** can also be used to implement computer system **212** in **Figure 2****.** In this illustrative example, data processing system **1000** includes communications framework **1002,** which provides communications between processor unit **1004,** memory **1006,** persistent storage **1008,** communications unit **1010,** input/output (I/O) unit **1012,** and display **1014.** In this example, communications framework **1002** takes the form of a bus system.

Processor unit **1004** serves to execute instructions for software that can be loaded into memory **1006.** Processor unit **1004** includes one or more processors. For example, processor unit **1004** can be selected from at least one of a multicore processor, a central processing unit (CPU), a graphics processing unit (GPU), a physics processing unit (PPU), a digital signal processor (DSP), a network processor, or some other suitable type of processor. Further, processor unit **1004** can may be implemented using one or more heterogeneous processor systems in which a main processor is present with secondary processors on a single chip. As another illustrative example, processor unit **1004** can be a symmetric multi-processor system containing multiple processors of the same type on a single chip.

Memory **1006** and persistent storage **1008** are examples of storage devices **1016.** A storage device is any piece of hardware that is capable of storing information, such as, for example, without limitation, at least one of data, program instructions in functional form, or other suitable information either on a temporary basis, a permanent basis, or both on a temporary basis and a permanent basis. Storage devices **1016** may also be referred to as computer-readable storage devices in these illustrative examples. Memory **1006,** in these examples, can be, for example, a random-access memory or any other suitable volatile or non-volatile storage device. Persistent storage **1008** may take various forms, depending on the particular implementation.

For example, persistent storage **1008** may contain one or more components or devices. For example, persistent storage **1008** can be a hard drive, a solid-state drive (SSD), a flash memory, a rewritable optical disk, a rewritable magnetic tape, or some combination of the above. The media used by persistent storage **1008** also can be removable. For example, a removable hard drive can be used for persistent storage **1008.**

Communications unit **1010,** in these illustrative examples, provides for communications with other data processing systems or devices. In these illustrative examples, communications unit **1010** is a network interface card.

Input/output unit **1012** allows for input and output of data with other devices that can be connected to data processing system **1000.** For example, input/output unit **1012** may provide a connection for user input through at least one of a keyboard, a mouse, or some other suitable input device. Further, input/output unit **1012** may send output to a printer. Display **1014** provides a mechanism to display information to a user.

Instructions for at least one of the operating system, applications, or programs can be located in storage devices **1016,** which are in communication with processor unit **1004** through communications framework **1002.** The processes of the different examples can be performed by processor unit **1004** using computer-implemented instructions, which may be located in a memory, such as memory **1006.**

These instructions are referred to as program instructions, computer usable program instructions, or computer-readable program instructions that can be read and executed by a processor in processor unit **1004.** The program instructions in the different examples can be embodied on different physical or computer-readable storage media, such as memory **1006** or persistent storage **1008.**

Program instructions **1018** is located in a functional form on computer-readable media **1020** that is selectively removable and can be loaded onto or transferred to data processing system **1000** for execution by processor unit **1004.** Program instructions **1018** and computer-readable media **1020** form computer program product **1022** in these illustrative examples. In the illustrative example, computer-readable media **1020** is computer-readable storage media **1024.**

Computer-readable storage media **1024** is a physical or tangible storage device used to store program instructions **1018** rather than a medium that propagates or transmits program instructions **1018.** Computer readable storage media **1024** may be at least one of an electronic storage medium, a magnetic storage medium, an optical storage medium, an electromagnetic storage medium, a semiconductor storage medium, a mechanical storage medium, or other physical storage medium. Some known types of storage devices that include these mediums include: a diskette, a hard disk, a random access memory (RAM), a read-only memory (ROM), an erasable programmable read-only memory (EPROM or Flash memory), a static random access memory (SRAM), a compact disc read-only memory (CD-ROM), a digital versatile disk (DVD), a memory stick, a floppy disk, a mechanically encoded device, such as punch cards or pits / lands formed in a major surface of a disc, or any suitable combination thereof.

Computer readable storage media **1024** medium, as that term is used in the present disclosure, is not to be construed as storage in the form of transitory signals per se, such as at least one of radio waves or other freely propagating electromagnetic waves, electromagnetic waves propagating through a waveguide, light pulses passing through a fiber optic cable, electrical signals communicated through a wire, or other transmission media.

Further, data can be moved at some occasional points in time during normal operations of a storage device. These normal operations include access, de-fragmentation or garbage collection. However, these operations do not render the storage device as transitory because the data is not transitory while the data is stored in the storage device.

Alternatively, program instructions **1018** can be transferred to data processing system **1000** using a computer-readable signal media. The computer-readable signal media are signals and can be, for example, a propagated data signal containing program instructions **1018.** For example, the computer-readable signal media can be at least one of an electromagnetic signal, an optical signal, or any other suitable type of signal. These signals can be transmitted over connections, such as wireless connections, optical fiber cable, coaxial cable, a wire, or any other suitable type of connection.

Further, as used herein, "computer-readable media **1020"** can be singular or plural. For example, program instructions **1018** can be located in computer-readable media **1020** in the form of a single storage device or system. In another example, program instructions **1018** can be located in computer-readable media **1020** that is distributed in multiple data processing systems. In other words, some instructions in program instructions **1018** can be located in one data processing system while other instructions in program instructions **1018** can be located in one data processing system. For example, a portion of program instructions **1018** can be located in computer-readable media **1020** in a server computer while another portion of program instructions **1018** can be located in computer-readable media **1020** located in a set of client computers.

The different components illustrated for data processing system **1000** are not meant to provide architectural limitations to the manner in which different examples can be implemented. In some illustrative examples, one or more of the components may be incorporated in or otherwise form a portion of, another component. For example, memory **1006,** or portions thereof, may be incorporated in processor unit **1004** in some illustrative examples. The different illustrative examples can be implemented in a data processing system including components in addition to or in place of those illustrated for data processing system **1000.** Other components shown in **Figure 10** can be varied from the illustrative examples shown. The different examples can be implemented using any hardware device or system capable of running program instructions **1018.**

Thus, the illustrative examples provide a method, apparatus, system, and computer program product for managing slots. A method, apparatus, system, and computer program product for managing slots. Slots allocated to an airline identified by computer system. A model that describes a relationship of flights in an input flight schedule and slots that have been allocated subject to constraints is created by the computer system. An output flight schedule is created by the computer system using the model to obtain an extrema using a set of objectives, wherein the flights are aligned to the slots in the output flight schedule.

As a result, one or more illustrative examples can generate improved flight schedules based on matching flights to slots. In the illustrative examples, slots are not tightly linked to flights. As a result, the flights can be interchanged or swapped as needed between different slots to obtain matches between flights and slots and to reduce the amount of mismatch between flights and slots when exact matches are not possible. The matching of slots is subject to constraints such as using slots for flights in the same airport. Further, constraints in swapping slots can also be based on slots being swapped for same type of aircraft or aircraft of a similar weight and performance.

The description of the different illustrative examples has been presented for purposes of illustration and description and is not intended to be exhaustive or limited to the examples in the form disclosed. The different illustrative examples describe components that perform actions or operations. In an illustrative example, a component can be configured to perform the action or operation described. For example, the component can have a configuration or design for a structure that provides the component an ability to perform the action or operation that is described in the illustrative examples as being performed by the component. Further, to the extent that terms "includes", "including", "has", "contains", and variants thereof are used herein, such terms are intended to be inclusive in a manner similar to the term "comprises" as an open transition word without precluding any additional or other elements.

Many modifications and variations will be apparent to those of ordinary skill in the art. Further, different illustrative examples may provide different features as compared to other desirable examples. The example or examples selected are chosen and described in order to best explain the principles of the examples, the practical application, and to enable others of ordinary skill in the art to understand the disclosure for various examples with various modifications as are suited to the particular use contemplated.

## Claims

1. A method for managing slots (132, 204, 314, 400), the method comprising:
identifying (500), by a computer system (212), the slots (132, 204, 314, 400) allocated to an airline (134, 207, 300), each slot representing an authorization to take off or land at a particular airport on a particular day at a specified time;
creating (502), by the computer system (212), a model (135, 220) that describes a relationship between flights (209) for an input flight schedule (206, 312) and the slots (132, 204, 314, 400) that have been allocated subject to constraints (224, 308); and
generating (504), by the computer system (212), an output flight schedule (138, 226) using the model (135, 220) to obtain an extrema using a set of objectives (228), wherein the flights (209) are aligned to the slots (132, 204, 314, 400) in the output flight schedule (138, 226) ;
the method further comprising adjusting (600), by the computer system (212), a number of the flights (209) in the output flight schedule (138, 226), wherein the output flight schedule (138, 226) with adjustments to the number of the flights (209) becomes the input flight schedule (206, 312) to perform another iteration in response to the output flight schedule (138, 226) being unacceptable; and
repeating (602), by the computer system (212), the creating the model (135, 220), generating the output flight schedule (138, 226), and adjusting the output flight schedule (138, 226) and the number of the flights (209) until an acceptable flight to slot alignment is reached.

2. The method of claim 1 further comprising:
adjusting (700), by the computer system (212), the set of objectives (228) in response to the output flight schedule (138, 226) being unacceptable; and
repeating (702), by the computer system (212), the creating the model (135, 220), generating the output flight schedule (138, 226), and adjusting the set of objectives (228) until the output flight schedule (138, 226) is acceptable.

3. The method of any one of the preceding claims further comprising:
identifying, by the computer system (212), a set of slot changes (238) in response to the output flight schedule (138, 226) being acceptable;
sending, by the computer system (212), a request to change the set of the slots (132, 204, 314, 400) to a slot coordinator (144, 242, 316); and
repeating, by the computer system (212), the creating and generating steps using the slots (132, 204, 314, 400) allocated the airline (134, 207, 300) as a result of a change to the slots (132, 204, 314, 400) made in response to the request to change the set of the slots (132, 204, 314, 400) sent to the slot coordinator (144, 242, 316).

4. The method of any one of the preceding claims, wherein the model (135, 220) swaps the slots (132, 204, 314, 400) between the flights (209) such that increased alignment of the slots (132, 204, 314, 400) with the flights (209) occurs.

5. The method of any preceding claim, further comprising:
storing (900), by the computer system (212), the output flight schedule (138, 226) as a final flight schedule (150) in a datastore in a data storage system (148) accessible over a network (102); and
automatically sending (902), by the computer system (212), flight information for a flight from the final flight schedule (150) stored in the data storage system (148) to a client computer (112, 114, 116) over the network (102) in response an event relating to the flight.

6. The method of any preceding claim,
wherein the constraints (224, 308) are selected from at least one of an aircraft fleet, a buffer time between the flights (209), use of available aircraft, or available slots; or optionally
wherein the model (135, 220) comprises an objective function (221) and the constraints (224, 308).

7. The method of any one of the preceding claims, wherein the model (135, 220) is a mixed integer linear programming model (219).

8. The method of any one of the preceding claims, wherein the output flight schedule (138, 226) is generated using a branch and bound optimization process.

9. A flight scheduling system (202) comprising:
a computer system (212);
a schedule generator (130, 214) in the computer system (212), wherein the schedule generator (130, 214) is configured to:
identify slots (132, 204, 314, 400) allocated to an airline (134, 207, 300), each slot representing an authorization to take off or land at a particular airport on a particular day at a specified time;
create a model (135, 220) that describes a relationship between flights (209) for an input flight schedule (206, 312) and the slots (132, 204, 314, 400) that have been allocated subject to constraints (224, 308); and
generate an output flight schedule (138, 226) using the model (135, 220) to obtain an extrema using a set of objectives (228), wherein the flights (209) are aligned to the slots (132, 204, 314, 400) in the output flight schedule (138, 226);
wherein the schedule generator (130, 214) is configured to:
adjust a number of the flights (209) in the output flight schedule (138, 226), wherein the output flight schedule (138, 226) with adjustments to the number of the flights (209) becomes the input flight schedule (206, 312) to perform another iteration in response to the output flight schedule (138, 226) being unacceptable; and
repeat creating the model (135, 220), generating the output flight schedule (138, 226), and adjusting the set of objectives (228) until an acceptable flight to slot alignment is reached.

10. The flight scheduling system (202) of claim 9, wherein the schedule generator (130, 214) is configured to:
adjust the set of objectives (228) in response to the output flight schedule (138, 226) being unacceptable; and
repeat creating the model (135, 220), generating the output flight schedule (138, 226), and adjusting the set of objectives (228) until the output flight schedule (138, 226) is acceptable; or optionally
wherein the schedule generator (130, 214) is configured to:
identify a set of slot changes (238) in response to the output flight schedule (138, 226) being acceptable;
send a request to change the set of the slots (132, 204, 314, 400) to a slot coordinator (144, 242, 316); and
repeat creating the model (135, 220) and generating the output flight schedule (138, 226) using the slots (132, 204, 314, 400) allocated the airline (134, 207, 300) as a result of a change to the slots (132, 204, 314, 400) made in response to the request to change the set of the slots (132, 204, 314, 400) sent to the slot coordinator (144, 242, 316); or optionally
wherein the model (135, 220) swaps the slots (132, 204, 314, 400) between the flights (209) such that increased alignment of the slots (132, 204, 314, 400) with the flights (209) occurs.

11. The flight scheduling system (202) of any one of claims 9-10, wherein the schedule generator (130, 214) is configured to:
store the output flight schedule (138, 226) as a final flight schedule (150) in a datastore in a data storage system (148) accessible over a network (102); and
automatically send flight information for a flight from the final flight schedule (150) stored in the data storage system (148) to a client computer (112, 114, 116) over the network (102) in response an event relating to the flight.

12. The flight scheduling system (202) of any one of claims 9-11, wherein the constraints (224, 308) are selected from at least one of an aircraft fleet, a buffer time between the flights (209), use of available aircraft, or available slots.

13. The flight scheduling system (202) of any one of claims 9-12, wherein the model (135, 220) comprises an objective function (221) and constraints (224, 308).

14. The flight scheduling system (202) of any one of claims 9-13, wherein the model (135, 220) is a mixed integer linear programming model (219); or optionally
wherein the output flight schedule (138, 226) is generated using a branch and bound optimization process.

15. A computer program product (1022) for managing slots (132, 204, 314, 400), the computer program product (1022) comprising a computer readable storage medium (1024) having program instructions (1018) embodied therewith, the program instructions (1018) executable by a computer system (212) to cause the computer system (212) to: identify the slots (132, 204, 314, 400) allocated to an airline (134, 207, 300)), each slot representing an authorization to take off or land at a particular airport on a particular day at a specified time;
create a model (135, 220) that describes a relationship between flights (209) for an input flight schedule (206, 312) and the slots (132, 204, 314, 400) that have been allocated subject to constraints (224, 308); and
generate an output flight schedule (138, 226) using the model (135, 220) to obtain an extrema using a set of objectives (228), wherein the flights (209) are aligned to the slots (132, 204, 314, 400) in the output flight schedule (138, 226);
adjust (600) a number of the flights (209) in the output flight schedule (138, 226), wherein the output flight schedule (138, 226) with adjustments to the number of the flights (209) becomes the input flight schedule (206, 312) to perform another iteration in response to the output flight schedule (138, 226) being unacceptable; and
repeat (602) the creating the model (135, 220), generating the output flight schedule (138, 226), and adjusting the output flight schedule (138, 226) and the number of the flights (209) until an acceptable flight to slot alignment is reached.

## Patentansprüche

1. Verfahren zum Verwalten von Slots (132, 204, 314, 400), wobei das Verfahren Folgendes umfasst:
Identifizieren (500), durch ein Computersystem (212), der Slots (132, 204, 314, 400), die einer Fluggesellschaft (134, 207, 300) zugewiesen sind, wobei jeder Slot eine Genehmigung zum Starten oder Landen an einem bestimmten Flughafen an einem bestimmten Tag zu einer bestimmten Zeit darstellt;
Erzeugen (502), durch das Computersystem (212), eines Modells (135, 220), das eine Beziehung zwischen Flügen (209) für einen Eingabeflugplan (206, 312) und den Slots (132, 204, 314, 400), die unter Berücksichtigung von Einschränkungen (224, 308) zugewiesen wurden; und
Erzeugen (504), durch das Computersystem (212), eines Ausgabeflugplans (138, 226) unter Verwendung des Modells (135, 220), um ein Extremum unter Verwendung eines Satzes von Zielen (228) zu erhalten, wobei die Flüge (209) auf die Slots (132, 204, 314, 400) in dem Ausgabeflugplan (138, 226) ausgerichtet werden;
wobei das Verfahren ferner das Anpassen (600), durch das Computersystem (212), einer Anzahl der Flüge (209) in dem Ausgabeflugplan (138, 226) aufweist, wobei der Ausgabeflugplan (138, 226) mit Anpassungen an die Anzahl der Flüge (209) zu dem Eingabeflugplan (206, 312) wird, um eine weitere Iteration in Reaktion darauf durchzuführen, dass der Ausgabeflugplan (138, 226) inakzeptabel ist; und
Wiederholen (602), durch das Computersystem (212), des Erzeugens des Modells (135, 220), des Erzeugens des Ausgabeflugplans (138, 226) und des Anpassens des Ausgabeflugplans (138, 226) und der Anzahl der Flüge (209), bis eine akzeptable Flug-Slot-Ausrichtung erreicht ist.

2. Verfahren nach Anspruch 1, das ferner Folgendes umfasst:
Anpassen (700), durch das Computersystem (212), des Satzes von Zielen (228) in Reaktion darauf, dass der Ausgabeflugplan (138, 226) inakzeptabel ist; und
Wiederholen (702), durch das Computersystem (212), des Erzeugens des Modells (135, 220), des Erzeugens des Ausgabeflugplans (138, 226) und des Anpassens des Satzes von Zielen (228), bis der Ausgabeflugplan (138, 226) akzeptabel ist.

3. Verfahren nach einem der vorhergehenden Ansprüche, das ferner Folgendes umfasst:
Identifizieren, durch das Computersystem (212), eines Satzes von Slot-Änderungen (238) als Reaktion darauf, dass der Ausgabeflugplan (138, 226) akzeptabel ist;
Senden, durch das Computersystem (212), einer Anforderung zum Ändern des Satzes der Slots (132, 204, 314, 400) an einen Slot-Koordinator (144, 242, 316); und
Wiederholen, durch das Computersystem (212), der Erzeugungs- und Generierungsschritte unter Verwendung der Slots (132, 204, 314, 400), die der Fluggesellschaft (134, 207, 300) zugewiesen wurden, als Ergebnis einer Änderung der Slots (132, 204, 314, 400), die in Reaktion auf die an den Slot-Koordinator (144, 242, 316) gesendete Anfrage zum Ändern der Menge der Slots (132, 204, 314, 400) vorgenommen wurde.

4. Verfahren nach einem der vorhergehenden Ansprüche, wobei das Modell (135, 220) die Slots (132, 204, 314, 400) zwischen den Flügen (209) vertauscht, so dass eine erhöhte Ausrichtung der Slots (132, 204, 314, 400) auf die Flüge (209) erfolgt.

5. Verfahren nach einem der vorhergehenden Ansprüche, das ferner Folgendes umfasst:
Speichern (900), durch das Computersystem (212), des Ausgabeflugplans (138, 226) als endgültigen Flugplan (150) in einem Datenspeicher in einem Datenspeichersystem (148), auf das über ein Netzwerk (102) zugegriffen werden kann; und
Automatisches Senden (902), durch das Computersystem (212), von Fluginformationen für einen Flug von dem endgültigen Flugplan (150), der in dem Datenspeichersystem (148) gespeichert ist, an einen Client-Computer (112, 114, 116) über das Netzwerk (102) als Reaktion auf ein Ereignis, das sich auf den Flug bezieht.

6. Verfahren nach einem beliebigen vorhergehenden Anspruch,
wobei die Beschränkungen (224, 308) aus mindestens einem der folgenden Elemente ausgewählt werden: eine Flugzeugflotte, eine Pufferzeit zwischen den Flügen (209), Verwendung von verfügbaren Flugzeugen oder verfügbaren Slots; oder optional
wobei das Modell (135, 220) eine Zielfunktion (221) und die Beschränkungen (224, 308) umfasst.

7. Verfahren nach einem der vorhergehenden Ansprüche, wobei das Modell (135, 220) ein gemischt-ganzzahliges lineares Programmiermodell (219) ist.

8. Verfahren nach einem der vorhergehenden Ansprüche, wobei der Ausgabeflugplan (138, 226) unter Verwendung eines Branch-and-Bound-Optimierungsverfahrens erzeugt wird.

9. Flugplanungssystem (202), das Folgendes umfasst:
ein Computersystem (212);
einen Plangenerator (130, 214) in dem Computersystem (212), wobei der Plangenerator (130, 214) für Folgendes ausgebildet ist:
Identifizieren von Slots (132, 204, 314, 400), die einer Fluggesellschaft (134, 207, 300) zugewiesen sind, wobei jeder Slot eine Berechtigung zum Starten oder Landen auf einem bestimmten Flughafen an einem bestimmten Tag und zu einer bestimmten Uhrzeit darstellt;
Erzeugen eines Modells (135, 220), das eine Beziehung zwischen Flügen (209) für einen Eingabeflugplan (206, 312) und den Slots (132, 204, 314, 400) beschreibt, die unter Beschränkungen (224, 308) zugewiesen wurden; und
Erzeugen eines Ausgabeflugplans (138, 226) unter Verwendung des Modells (135, 220), um ein Extremum unter Verwendung eines Satzes von Zielen (228) zu erhalten, wobei die Flüge (209) auf die Slots (132, 204, 314, 400) in dem Ausgabeflugplan (138, 226) ausgerichtet sind;
wobei der Plangenerator (130, 214) für Folgendes ausgebildet ist:
Anpassen einer Anzahl der Flüge (209) im Ausgabeflugplan (138, 226), wobei der Ausgabeflugplan (138, 226) mit Anpassungen der Anzahl der Flüge (209) zum Eingabeflugplan (206, 312) wird, um in Reaktion darauf, dass der Ausgabeflugplan (138, 226) inakzeptabel ist, eine weitere Iteration durchzuführen; und
Wiederholen des Erzeugens des Modells (135, 220), des Erzeugens des Ausgabeflugplans (138, 226) und des Anpassens der Zielvorgaben (228), bis eine akzeptable Flug-auf-Slot-Ausrichtung erreicht ist.

10. Flugplanungssystem (202) nach Anspruch 9, wobei der Plangenerator (130, 214) für Folgendes ausgebildet ist:
Anpassen des Satzes von Zielen (228) in Reaktion darauf, dass der Ausgabeflugplan (138, 226) inakzeptabel ist; und
Wiederholen des Erzeugens des Modells (135, 220), des Erzeugens des Ausgabeflugplans (138, 226) und des Anpassens des Satzes von Zielen (228), bis der Ausgabeflugplan (138, 226) akzeptabel ist; oder optional wobei der Plangenerator (130, 214) für Folgendes ausgebildet ist:
Identifizieren eines Satzes von Slot-Änderungen (238) in Reaktion darauf, dass der Ausgabeflugplan (138, 226) akzeptabel ist;
Senden einer Anforderung zum Ändern des Satzes der Slots (132, 204, 314, 400) an einen Slot-Koordinator (144, 242, 316); und
Wiederholen des Erzeugens des Modells (135, 220) und des Erzeugens des Ausgabeflugplans (138, 226) unter Verwendung der der Fluggesellschaft (134, 207, 300) zugewiesenen Slots (132, 204, 314, 400) als Ergebnis einer Änderung der Slots (132, 204, 314, 400), die in Reaktion auf die an den Slot-Koordinator (144, 242, 316) gesendete Anfrage zur Änderung des Satzes der Slots (132, 204, 314, 400) vorgenommen wurde; oder optional
wobei das Modell (135, 220) die Slots (132, 204, 314, 400) zwischen den Flügen (209) vertauscht, so dass eine erhöhte Ausrichtung der Slots (132, 204, 314, 400) auf die Flüge (209) erfolgt.

11. Flugplanungssystem (202) nach einem der Ansprüche 9-10, wobei der Plangenerator (130, 214) für Folgendes ausgebildet ist:
Speichern des Ausgabeflugplans (138, 226) als endgültiger Flugplan (150) in einem Datenspeicher in einem Datenspeichersystem (148), auf das über ein Netzwerk (102) zugegriffen werden kann; und
automatisches Senden von Fluginformationen für einen Flug von dem endgültigen Flugplan (150), der im Datenspeichersystem (148) gespeichert ist, an einen Client-Computer (112, 114, 116) über das Netzwerk (102) als Reaktion auf ein Ereignis, das sich auf den Flug bezieht.

12. Flugplanungssystem (202) nach einem der Ansprüche 9-11, wobei die Einschränkungen (224, 308) ausgewählt sind aus mindestens einem von einer Flugzeugflotte, einer Pufferzeit zwischen den Flügen (209), der Nutzung verfügbarer Flugzeuge oder verfügbarer Slots.

13. Flugplanungssystem (202) nach einem der Ansprüche 9-12, wobei das Modell (135, 220) eine Zielfunktion (221) und Einschränkungen (224, 308) umfasst.

14. Flugplanungssystem (202) nach einem der Ansprüche 9-13, wobei das Modell (135, 220) ein gemischtes ganzzahliges lineares Programmiermodell (219) ist; oder optional
wobei der Ausgabeflugplan (138, 226) unter Verwendung eines Branch-and-Bound-Optimierungsverfahrens erzeugt wird.

15. Computerprogrammprodukt (1022) zum Verwalten von Slots (132, 204, 314, 400), wobei das Computerprogrammprodukt (1022) ein computerlesbares Speichermedium (1024) mit damit verkörperten Programmanweisungen (1018) umfasst, wobei die Programmanweisungen (1018) durch ein Computersystem (212) ausführbar sind, um das Computersystem (212) zu Folgendem zu veranlassen:
Identifizieren der einer Fluggesellschaft (134, 207, 300) zugewiesenen Slots (132, 204, 314, 400), wobei jeder Slot eine Berechtigung zum Starten oder Landen auf einem bestimmten Flughafen an einem bestimmten Tag zu einer bestimmten Zeit darstellt;
Erzeugen eines Modells (135, 220), das eine Beziehung zwischen Flügen (209) für einen Eingabeflugplan (206, 312) und den Slots (132, 204, 314, 400) beschreibt, die unter Beschränkungen (224, 308) zugewiesen wurden; und
Erzeugen eines Ausgabeflugplans (138, 226) unter Verwendung des Modells (135, 220), um ein Extremum unter Verwendung eines Satzes von Zielen (228) zu erhalten, wobei die Flüge (209) auf die Slots (132, 204, 314, 400) in dem Ausgabeflugplan (138, 226) ausgerichtet sind;
Anpassen (600) einer Anzahl der Flüge (209) im Ausgabeflugplan (138, 226), wobei der Ausgabeflugplan (138, 226) mit den Anpassungen der Anzahl der Flüge (209) zum Eingabeflugplan (206, 312) wird, um eine weitere Iteration in Reaktion darauf durchzuführen, dass der Ausgabeflugplan (138, 226) inakzeptabel ist; und
Wiederholen (602) des Erzeugens des Modells (135, 220), des Erzeugens des Ausgabeflugplans (138, 226) und des Anpassens des Ausgabeflugplans (138, 226) und der Anzahl der Flüge (209), bis eine akzeptable Flug-auf-Slot-Ausrichtung erreicht ist.

## Revendications

1. Procédé de gestion de créneaux (132, 204, 314, 400), le procédé comprenant :
l'identification (500), par un système informatique (212), des créneaux (132, 204, 314, 400) attribués à une compagnie aérienne (134, 207, 300), chaque créneau représentant une autorisation de décoller ou d'atterrir à un aéroport particulier, un jour particulier, à une heure spécifiée ;
la création (502), par le système informatique (212), d'un modèle (135, 220) qui décrit une relation entre des vols (209) pour un programme de vol d'entrée (206, 312) et les créneaux (132, 204, 314, 400) qui ont été attribués sous réserve de contraintes (224, 308) ; et
la génération (504), par le système informatique (212), d'un programme de vol de sortie (138, 226) à l'aide du modèle (135, 220) pour obtenir un extrema à l'aide d'un ensemble d'objectifs (228), les vols (209) étant alignés sur les créneaux (132, 204, 314, 400) dans le programme de vol de sortie (138, 226) ;
le procédé comprenant en outre l'ajustement (600), par le système informatique (212), d'un nombre des vols (209) dans le programme de vol de sortie (138, 226), le programme de vol de sortie (138, 226) avec des ajustements au nombre des vols (209) devenant le programme de vol d'entrée (206, 312) pour effectuer une autre itération en réponse au fait que le programme de vol de sortie (138, 226) est inacceptable ; et
la répétition (602), par le système informatique (212), de la création du modèle (135, 220), de la génération du programme de vol de sortie (138, 226), et de l'ajustement du programme de vol de sortie (138, 226) et du nombre des vols (209) jusqu'à ce qu'un alignement vol-créneau acceptable soit atteint.

2. Procédé selon la revendication 1, comprenant en outre :
l'ajustement (700), par le système informatique (212), de l'ensemble d'objectifs (228) en réponse au fait que le programme de vol de sortie (138, 226) est inacceptable ; et
la répétition (702), par le système informatique (212), de la création du modèle (135, 220), de la génération du programme de vol de sortie (138, 226), et de l'ajustement de l'ensemble d'objectifs (228) jusqu'à ce que le programme de vol de sortie (138, 226) soit acceptable.

3. Procédé selon l'une quelconque des revendications précédentes, comprenant en outre :
l'identification, par le système informatique (212), d'un ensemble de changements de créneaux (238) en réponse au fait que le programme de vol de sortie (138, 226) est acceptable ;
l'envoi, par le système informatique (212), d'une demande de changement de l'ensemble des créneaux (132, 204, 314, 400) à un coordonnateur de créneaux (144, 242, 316) ; et la répétition, par le système informatique (212), des étapes de création et de génération au moyen des créneaux (132, 204, 314, 400) attribués à la compagnie aérienne (134, 207, 300) suite à une modification des créneaux (132, 204, 314, 400) réalisée en réponse à la demande de changement de l'ensemble des créneaux (132, 204, 314, 400) envoyée au coordonnateur de créneaux (144, 242, 316).

4. Procédé selon l'une quelconque des revendications précédentes, le modèle (135, 220) permutant les créneaux (132, 204, 314, 400) entre les vols (209) de sorte qu'un alignement augmenté des créneaux (132, 204, 314, 400) avec les vols (209) se produise.

5. Procédé selon l'une quelconque des revendications précédentes, comprenant en outre :
le stockage (900), par le système informatique (212), du programme de vol de sortie (138, 226) en tant que programme de vol final (150) dans un magasin de données dans un système de stockage de données (148) accessible sur un réseau (102) ; et
l'envoi automatique (902), par le système informatique (212), d'informations de vol pour un vol à partir du programme de vol final (150) stocké dans le système de stockage de données (148) à un ordinateur client (112, 114, 116) sur le réseau (102) en réponse à un événement relatif au vol.

6. Procédé selon l'une quelconque des revendications précédentes,
les contraintes (224, 308) étant sélectionnés parmi au moins une flotte d'aéronefs, un temps tampon entre les vols (209), l'utilisation d'aéronefs disponibles ou des créneaux disponibles ; ou facultativement
le modèle (135, 220) comprenant une fonction objective (221) et les contraintes (224, 308).

7. Procédé selon l'une quelconque des revendications précédentes, le modèle (135, 220) étant un modèle de programmation linéaire mixte (219).

8. Procédé selon l'une quelconque des revendications précédentes, le programme de vol de sortie (138, 226) étant généré à l'aide d'un processus d'optimisation de séparation et évaluation.

9. Système de planification de vol (202) comprenant :
un système informatique (212) ;
un générateur de programme (130, 214) dans le système informatique (212), le générateur de programme (130, 214) étant configuré pour :
identifier des créneaux (132, 204, 314, 400) attribués à une compagnie aérienne (134, 207, 300), chaque créneau représentant une autorisation de décoller ou d'atterrir à un aéroport particulier, un jour particulier, à une heure spécifiée ;
créer un modèle (135, 220) qui décrit une relation entre des vols (209) pour un programme de vol d'entrée (206, 312) et les créneaux (132, 204, 314, 400) qui ont été attribués sous réserve de contraintes (224, 308) ; et
générer un programme de vol de sortie (138, 226) à l'aide du modèle (135, 220) pour obtenir un extrema à l'aide d'un ensemble d'objectifs (228), les vols (209) étant alignés sur les créneaux (132, 204, 314, 400) dans le programme de vol de sortie (138, 226) ;
le générateur de programme (130, 214) étant configuré pour :
ajuster un nombre des vols (209) dans le programme de vol de sortie (138, 226), le programme de vol de sortie (138, 226) avec des ajustements au nombre des vols (209) devenant le programme de vol d'entrée (206, 312) pour effectuer une autre itération en réponse au fait que le programme de vol de sortie (138, 226) est inacceptable ; et
répéter la création du modèle (135, 220), la génération du programme de vol de sortie (138, 226) et l'ajustement de l'ensemble d'objectifs (228) jusqu'à ce qu'un alignement vol/créneau acceptable soit atteint.

10. Système de planification de vol (202) selon la revendication 9, le générateur de planification (130, 214) étant configuré pour :
ajuster l'ensemble d'objectifs (228) en réponse au fait que le programme de vol de sortie (138, 226) est inacceptable ; et
répéter la création du modèle (135, 220), la génération du programme de vol de sortie (138, 226) et l'ajustement de l'ensemble d'objectifs (228) jusqu'à ce que le programme de vol de sortie (138, 226) soit acceptable ;
ou facultativement
le générateur de programme (130, 214) étant configuré pour :
identifier un ensemble de changements de créneaux (238) en réponse au fait que le programme de vol de sortie (138, 226) est acceptable ;
envoyer une demande de modification de l'ensemble des créneaux (132, 204, 314, 400) à un coordonnateur de créneaux (144, 242, 316) ; et
répéter la création du modèle (135, 220) et la génération du programme de vol de sortie (138, 226) à l'aide des créneaux (132, 204, 314, 400) attribués à la compagnie aérienne (134, 207, 300) suite à une modification des créneaux (132, 204, 314, 400) réalisée en réponse à la demande de changement de l'ensemble des créneaux (132, 204, 314, 400) envoyée au coordonnateur de créneaux (144, 242, 316) ; ou facultativement
le modèle (135, 220) permutant les créneaux (132, 204, 314, 400) entre les vols (209) de sorte qu'un alignement augmenté des créneaux (132, 204, 314, 400) avec les vols (209) se produise.

11. Système de planification de vol (202) selon l'une quelconque des revendications 9 et 10, le générateur de planification (130, 214) étant configuré pour :
stocker le programme de vol de sortie (138, 226) en tant que programme de vol final (150) dans un magasin de données dans un système de stockage de données (148) accessible sur un réseau (102) ; et
envoyer automatiquement des informations de vol pour un vol à partir du programme de vol final (150) stocké dans le système de stockage de données (148) à un ordinateur client (112, 114, 116) sur le réseau (102) en réponse à un événement relatif au vol.

12. Système de planification de vol (202) selon l'une quelconque des revendications 9 à 11, les contraintes (224, 308) étant sélectionnés parmi au moins une flotte d'aéronefs, un temps tampon entre les vols (209), l'utilisation d'aéronefs disponibles ou des créneaux disponibles.

13. Système de planification de vol (202) selon l'une quelconque des revendications 9 à 12, le modèle (135, 220) comprenant une fonction objective (221) et des contraintes (224, 308).

14. Système de planification de vol (202) selon l'une quelconque des revendications 9 à 13, le modèle (135, 220) étant un modèle de programmation linéaire mixte (219) ; ou facultativement
le programme de vol de sortie (138, 226) étant généré à l'aide d'un processus d'optimisation de séparation et évaluation.

15. Produit de programme informatique (1022) destiné à gérer des créneaux (132, 204, 314, 400), le produit de programme informatique (1022) comprenant un support de stockage lisible par ordinateur (1024) dans lequel sont incorporées des instructions de programme (1018), les instructions de programme (1018) pouvant être exécutées par un système informatique (212) pour amener le système informatique (212) à :
identifier les créneaux (132, 204, 314, 400) attribués à une compagnie aérienne (134, 207, 300), chaque créneau représentant une autorisation de décoller ou d'atterrir à un aéroport particulier, un jour particulier, à une heure spécifiée ;
créer un modèle (135, 220) qui décrit une relation entre des vols (209) pour un programme de vol d'entrée (206, 312) et les créneaux (132, 204, 314, 400) qui ont été attribués sous réserve de contraintes (224, 308) ; et
générer un programme de vol de sortie (138, 226) à l'aide du modèle (135, 220) pour obtenir un extrema à l'aide d'un ensemble d'objectifs (228), les vols (209) étant alignés sur les créneaux (132, 204, 314, 400) dans le programme de vol de sortie (138, 226) ;
ajuster (600) un nombre des vols (209) dans le programme de vol de sortie (138, 226), le programme de vol de sortie (138, 226) avec des ajustements au nombre des vols (209) devenant le programme de vol d'entrée (206, 312) pour effectuer une autre itération en réponse au fait que le programme de vol de sortie (138, 226) est inacceptable ; et
répéter (602) la création du modèle (135, 220), la génération du programme de vol de sortie (138, 226) et l'ajustement du programme de vol de sortie (138, 226) et du nombre des vols (209) jusqu'à ce qu'un alignement vol-créneau acceptable soit atteint.
